# EUROPÄISCHE PATENTSCHRIFT

(11) **EP 1 264 530 B1**
(45) Veröffentlichungstag und Bekanntmachung des Hinweises auf die Patenterteilung: **13.02.2008**
(21) Anmeldenummer: 02100487.4
(22) Anmeldetag: 14.05.2002
(51) Int. Cl.: A01F 12/44

(54) **Einstelleinrichtung eines Reinigungselements eines Mähdreschers**
Adjustment device of a cleaning element of a combine
Arrangement de réglage d'un élément de nettoyage d'une moissonneuse-batteuse

(30) Priorität: 05.06.2001 US 874540
(43) Veröffentlichungstag der Anmeldung: 11.12.2002
(73) Patentinhaber: DEERE & COMPANY, Moline, Illinois 61265-8098 (US)
(72) Erfinder: Anderson, Mark David, Bettendorf, IA 52722 (US); Burns, Jon Leo, Davenport, IA 52804 (US); Bush, Martin Kenneth, Geneseo, IL 61254 (US); Chervenka, Heather Irene, Bettendorf, IA 52722 (US); Nelson, Jeff Arthur, East Moline, IL 61244 (US); Seyller, Jack Richard, Moline, IL 61265 (US); Ziegler, Duane Herbert, Colona, IL 61241 (US)
(74) Vertreter: Holst, Sönke

(56) Entgegenhaltungen:
- EP-A- 0 682 860
- EP-A- 1 068 792
- EP-A- 1 068 793
- EP-A- 1 166 617
- US-A- 4 502 493

## Beschreibung

Die Erfindung betrifft ein Reinigungselement eines Mähdreschers nach dem Oberbegriff des Anspruchs 1 und ein Verfahren nach dem Oberbegriff des Anspruchs 10.

Bei einem Mähdrescher sind nach dem Dreschen und Trennen typischerweise noch Spreu und Stroh mit dem Korn vermischt. Die Reinigungseinrichtung entfernt diese Verunreinigungen aus dem Korn. Bei den meisten Mähdreschern umfasst die Reinigungseinrichtung drei Hauptkomponenten: ein Gebläse, ein Obersieb und ein Untersieb. Das Gebläse hat sein eigenes Gehäuse, während das Obersieb und das Untersieb am Siebkasten befestigt sind.

Das Gebläse umfasst einen mehrflügeligen Ventilator, der vor dem Siebkasten angeordnet ist. Der vom Ventilator erzeugte Luftstrom entfernt den größten Teil der Spreu und des Strohs vom Korn, indem die Spreu und das Stroh zur Rückseite des Mähdreschers hinausgeblasen werden. Der Luftstrom kann durch eine Einstellung der Ventilatorgeschwindigkeit oder durch Änderung der Ventilatoröffnung reguliert werden. Das Korn fällt durch das Obersieb und das Untersieb auf einen Schneckenförderer für sauberes Korn und wird in den Korntank gefördert.

Der Siebkasten, der das Obersieb und das Untersieb enthält, ist an der tragenden Struktur des Mähdreschers befestigt, unterhalb der Trenneinrichtung. Die Unterseite des Siebkastens enthält den Überkehrschneckenförderer und den Schneckenförderer für sauberes Korn.

Das Obersieb und das Untersieb sind an Aufhängungen aufgehängt, die an den Seiten des Mähdreschers angebracht sind. Es gibt drei Arten typischer Bewegungen des Siebkastens: Hin- und Herbewegen, Schütteln und Kaskadieren. Bei einem sich hin- und herbewegenden Siebkasten bewegen sich das Obersieb und das Untersieb in zueinander gegenläufigen Richtungen. Bei einem schüttelnden Siebkasten bewegen sich das Obersieb und das Untersieb in dieselbe Richtung. Bei einem kaskadierenden Siebkasten (engl. "cascading") sind das Obersieb und das Untersieb so angeordnet, dass das Material von einem Sieb in einer wasserfallartigen oder rollenden Bewegung auf das andere Sieb fällt.

Die Obersiebe und die Untersiebe sind entweder einstellbar oder nicht-einstellbar. Ein einstellbares Ober- oder Untersieb ist aus einer Reihe sich quer erstreckender Lamellen mit Reihen von Zähnen aufgebaut. Jede dieser Lamellen ist an einer Kurbelwelle befestigt, die einen Kurbelarm aufweist, der sich im Eingriff mit einer sich axial erstreckenden Verstellstange befindet. Durch ein axiales Verschieben der Verstellstange werden alle Lamellen gleichzeitig bewegt, um den Spalt zwischen benachbarten Lamellen zwischen völlig geöffneten und völlig geschlossenen Positionen zu ändern. Jedes Element wird typischerweise einzeln verstellt, obwohl ein Aktor mit den Verstellstangen von zwei oder mehr Elementen gekoppelt sein könnte.

Das einstellbare Obersieb und Untersieb werden abhängig von den Erntegutbedingungen eingestellt. Die Lamellen des Obersiebs werden gerade so weit geöffnet oder geschlossen, dass das Korn durch das Obersieb fällt, bevor es sich über die Länge des Obersiebs bewegt hat. Wenn das Obersieb zu weit geöffnet wird, kann es das Untersieb mit Spreu überlasten. Wenn das Obersieb nicht weit genug geöffnet wird, wird überschüssiges Korn an der Rückseite des Mähdreschers verloren gehen. Wenn das Untersieb nicht weit genug geöffnet ist, wird überschüssiges Korn dem Überkehrschneckenförderer zugeführt. Die Lamellen des Untersiebs müssen weit genug geöffnet werden, um den Körnern des Getreides zu ermöglichen, leicht durch sie hindurch zu fallen, aber nicht so weit, dass Stroh und Spreu hindurch fallen können. Ein Mähdrescher kann mit einer Vor-Reinigung vor dem Obersieb ausgestattet sein, das noch ein weiteres mit Lamellen ausgestattetes Reinigungselement umfasst. Im folgenden bezieht sich der Terminus "Reinigungselement" auf ein beliebiges Element mit einstellbaren Lamellen, unabhängig davon, ob es sich in einer Vor-Reinigung, einem Obersieb oder einem Untersieb befindet.

Bei vielen Mähdreschern muss ein Bediener an der Rückseite des Mähdreschers zwischen die Seitenbleche greifen, um jedes Element einzustellen. Das macht die Einstellungen beschwerlich und zeitaufwändig. Verschiedene fernbedienbare Einstellmechanismen wurden vorgeschlagen. Die US 4 897 027 A offenbart einen Kabelantriebsmechanismus, der einem Bediener erlaubt, den Winkel der Lamellen vom Platz eines Bedieners aus einzustellen. Die US 5 586 033 A offenbart ein Gerät, das die Lamellen durch einen motorisch angetriebenen Kabelmechanismus zur selbsttätigen Steuerung antreibt. Der Motor ist am Rahmen des Mähdreschers befestigt. Andere Einstellmechanismen verwenden Aktoren, die am Rahmen des Ober- oder Untersiebs befestigt sind. Die Aktoren können elektrisch betrieben werden. Jedem Element kann ein eigener Aktor zugeordnet sein (DE 101 11 531 A) oder ein einzelner Aktor kann mit den Verstellstangen mehrerer Elemente des Ober- bzw. Untersiebs gekoppelt sein (EP 1 068 793 A).

Die EP 1 068 793 A beschreibt eine Sensoranordnung zur Erfassung der Position der Lamellen, die eine Widerstandsfläche und zwei Schaltkontakte umfasst. Bei Erreichen einer der Endlagen der Lamellen wird jeweils einer der Schaltkontakte betätigt. Ein Schleifer kontaktiert die Widerstandsfläche und verändert den messbaren Widerstandswert in Abhängigkeit von der Position einer mit den Lamellen in Antriebsverbindung stehenden Kolbenstange. Anhand der Schaltkontakte wird die Ausrichtung der Widerstandsfläche automatisch der Position der Kolbenstange zugeordnet. Hier wird durch die Widerstandsfläche die Position der Kolbenstange erfasst. Als nachteilig ist anzusehen, dass eine derartige Widerstandsfläche relativ fehleranfällig ist, da Verunreinigungen und Kontaktfehler ihre Funktion beeinträchtigen.

Ein Problem bei der Verwendung eines Kabelantriebs zur Ferneinstellung der Reinigungselemente ist die Hysterese, die Folge von Kabelverwindungen und von Spiel in den Verbindungsstellen der Einstellkopplungen ist. Eine Lösung dieses Problems ist, den Aktor direkt am Rahmen des Ober- oder Untersiebs anzubringen. Die Schwierigkeit der Anbringung des Aktors am Rahmen liegt in der Vibrations- und Stoßbelastung des Aktors, da sich das Ober- und Untersieb gegenüber dem Mähdrescher bewegen, die zu dem Spiel in der Kopplung zwischen dem Aktor und der Verstellstange hinzukommt. Ein anderes Problemfeld liegt in einer korrekten Rückkopplung der Position der Lamellen an den Bediener.

Die der Erfindung zugrunde liegende Aufgabe wird darin gesehen, eine verbesserte Einstelleinrichtung eines Reinigungselements eines Mähdreschers bereitzustellen.

Diese Aufgabe wird erfindungsgemäß durch die Lehre der Patentansprüche 1 und 10 gelöst, wobei in den weiteren Patentansprüchen Merkmale aufgeführt sind, die die Lösung in vorteilhafter Weise weiterentwickeln.

Die Erfindung stellt ein Reinigungselement eines Mähdreschers mit einem kompakten Aktor bereit. Der Aktor hat ein linear bewegliches Ausgabeelement, das direkt an der Verstellstange jedes Elements befestigt ist. Das Ausgabeelement bewegt die Verstellstange, um zu bewirken, dass die Öffnung der Lamellen eingestellt wird. Der Aktor umfasst einen vorzugsweise elektrischen fremdkraftbetriebenen Motor, um das Ausgabeelement zu bewegen. Zwei in der Regel kontaktlose Sensoren werden genutzt, um die Position des Ausgabeelements festzustellen. Der Motor und die Sensoren sind vorzugsweise innerhalb eines Gehäuses versiegelt angeordnet, um diese Komponenten vor Verunreinigungen aus der Umgebung zu schützen. Der erste Sensor sendet ein Signal an ein Steuersystem, wenn sich das Ausgabeelement in einer bekannten Position befindet. Die bekannte Position des Ausgabeelements entspricht einem bekannten Abstand zwischen den Lamellen des Reinigungselements. Der zweite Sensor sendet ein Signal an das Steuersystem, das vom Ausmaß der Bewegung des Ausgabeelements abhängt. Durch ein Nachverfolgen oder Beobachten der Bewegung des Ausgabeelements aus der bekannten Position ist die gegenwärtige Position des Ausgabeelements bekannt, anhand der die Öffnung der Lamellen basierend auf der bekannten Geometrie der Lamellen festgestellt wird. Die Position der Lamellen kann angezeigt und/oder als Rückkopplungssignal einer automatischen Steuerung genutzt werden.

Ein Bedienereingabegerät, das sich in einer vom Reinigungselement beabstandeten Stelle befindet, umfasst Schalter oder andere Eingabemechanismen, die vom Bediener zur Aktivierung des Aktors benutzt werden können. Es können mehrere Eingabegeräte verwendet werden. Ein Eingabegerät in der Kabine des Mähdreschers ermöglicht dem Bediener, während des Erntens Einstellungen vorzunehmen. Ein anderes, an der Seite des Mähdreschers angeordnetes Eingabegerät ermöglicht es, Einstellungen durchzuführen, um die Reinigungselemente zu säubern oder kleine Einstellungen durchzuführen, wenn die Maschine nicht erntet. Die Öffnung der Lamellen kann auch durch eine automatische Steuerung eingestellt werden.

Die Geschwindigkeit, mit der die Lamellen verstellt werden, kann durch den Bediener oder selbsttätig durch einen Controller wählbar sein.

Eine Verwendung von berührungslos arbeitenden Sensoren, vorzugsweise Halleffektsensoren, verbessert die Dauerhaftigkeit der Positionsrückkopplung. Wenn das Ausgabeelement direkt an der Verstellstange befestigt ist, ist die Einstelleinrichtung fast ganz von Totgang und Hysterese befreit, was eine genaue Rückkopplung der Position der Lamellen an den Bediener bzw. an das Steuersystem erlaubt, ohne die Position der Lamellen mit Sensoren zu erfassen, die sich im Flussweg des Ernteguts oder der Verunreinigungen befinden.

In den Zeichnungen ist ein nachfolgend näher beschriebenes Ausführungsbeispiel der Erfindung dargestellt. Es zeigt:
- Fig. 1: eine Seitenansicht eines landwirtschaftlichen Mähdreschers, in der die Dresch-, Trenn- und Reinigungszusammenbauten gezeigt sind,
- Fig. 2: eine Ansicht eines Teils eines Reinigungselements mit einem erfindungsgemäßen Aktor von unten,
- Fig. 3: eine Seitenansicht eines Teils des in Figur 2 gezeigten Reinigungselements,
- Fig. 4: eine Seitenansicht der inneren Komponenten des Aktors, und
- Fig. 5: ein Blockdiagramm des Steuersystems.

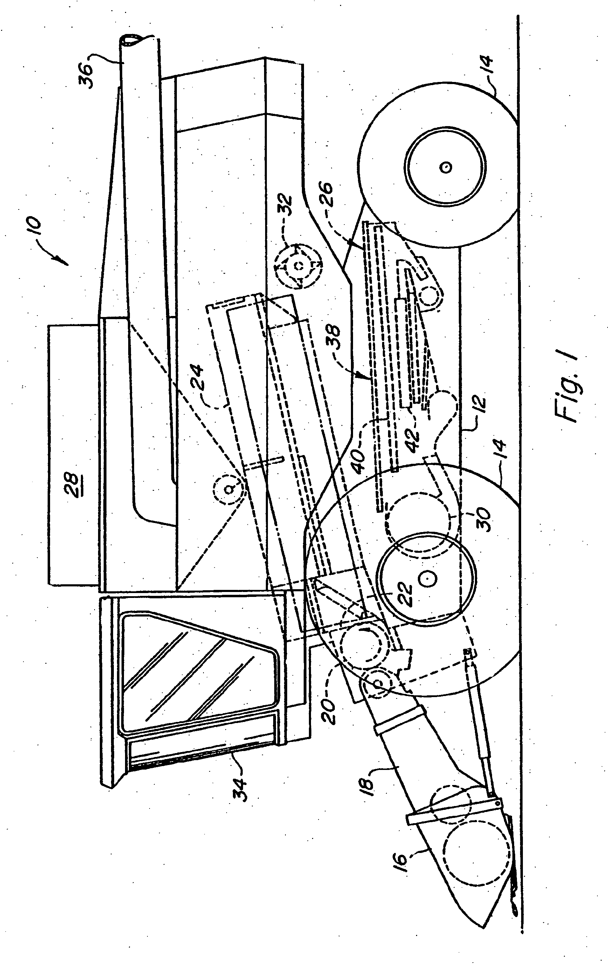

Voranzustellen ist, dass in der vorliegenden Offenbarung unter axialer Richtung die Vorwärtsfahrtrichtung des Mähdreschers verstanden wird. Figur 1 zeigt eine Seitenansicht eines selbstfahrenden landwirtschaftlichen Mähdreschers 10. Der Mähdrescher 10 umfasst eine tragende Struktur 12 mit Rädern 14. Die tragende Struktur 12 umfasst zwei sich axial erstreckende Seitenbleche, zwischen denen die verschiedenen Verarbeitungszusammenbauten für das Erntegut angeordnet sind. Ein Schneidwerk 16 ist an der Vorderseite des Mähdreschers 10 angebracht und führt geerntetes Gut einem Schrägförderer 18 zu. Der Schrägförderer 18 enthält einen Förderer, um das geerntete Gut den Dresch-, Trenn- und Reinigungszusammenbauten zuzuführen, die zwischen den Seitenblechen des Mähdreschers 10 angeordnet sind. Obwohl die vorliegende Erfindung als an einem Mähdrescher mit einer längs angeordneten Trennvorrichtung angebracht offenbart wird, kann sie auch an Mähdreschern mit Dreschtrommeln und Strohschüttlern und anderen Mähdrescherkonfigurationen mit einer mit Lamellen ausgestatteten Reinigungseinrichtung verwendet werden.

Bei dem dargestellten Mähdrescher führt der Schrägförderer 18 das geerntete Gut einer sich quer erstreckenden Leittrommel 20 zu, die das Gut durch einen Einlassübergangsbereich 22 einem axialen Dresch- und Trennzusammenbau 24 zuführt. Korn und Spreu werden vom axialen Dresch- und Trennzusammenbau 24 einem Reinigungszusammenbau 26 zugeführt. Der Reinigungszusammenbau 26 führt das saubere Korn wiederum einem Korntank 28 zu und die Spreu wird durch das Reinigungsgebläse 30 an der Rückseite des Mähdreschers hinaus geblasen. Erntegut, das weder Korn noch Spreu ist, wird vom axialen Dresch- und Trennzusammenbau 24 einer quer angeordneten Leittrommel 32 zugeführt, die das Material an der Rückseite des Mähdreschers 10 hinaus stößt.

Zeitweise im Korntank 28 gespeichertes sauberes Korn kann durch Betätigung einer Entladeförderschnecke 36 durch einen Bediener in der Bedienerkabine 34 entladen werden. Der Dresch- und Trennzusammenbau 24 und der Reinigungszusammenbau 26 sind zwischen den Seitenblechen der tragenden Struktur 12 angeordnet. Der Reinigungszusammenbau 26 umfasst einen Siebkasten 38, der wiederum ein Obersieb 40 und ein Untersieb 42 umfasst.

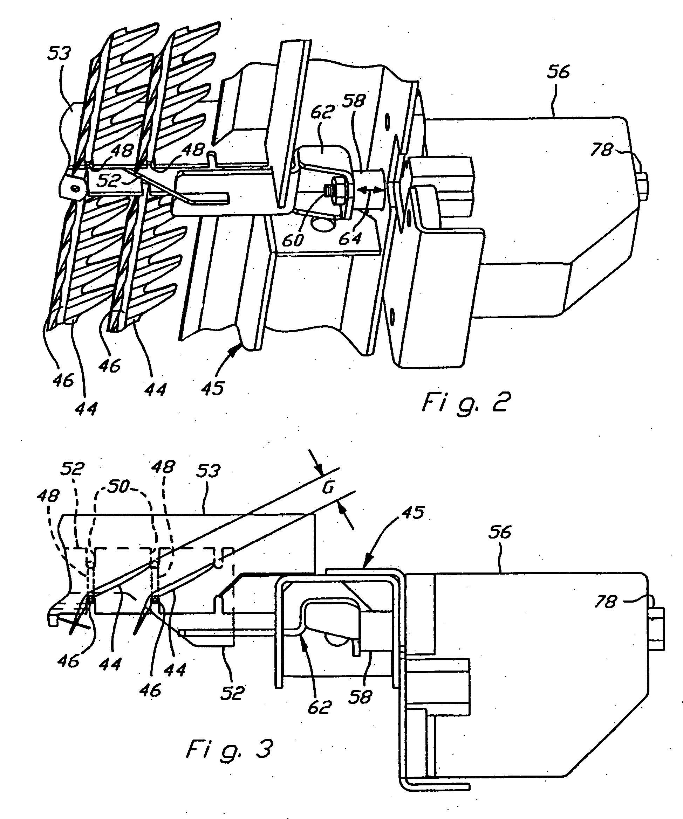

Das Obersieb 40 und das Untersieb 42 sind mit einem oder mehreren Elementen ausgestattet, die jeweils quer verlaufende, einstellbare Lamellen 44 aufweisen, die in den Figuren 2 und 3 gezeigt sind. Die vorliegende Erfindung bezieht sich auf einen Aktor zur Einstellung der Lamellen in den Elementen der Reinigung. Die Lamellen 44 sind in einem Rahmen 45 befestigt, der vom Siebkasten 38 getragen wird. Es wird auf Figur 3 verwiesen, gemäß der jede der Lamellen 44 mit einer Kurbelwelle 46 ausgestattet ist, die gekrümmt ist, um einen Kurbelarm 48 zu formen. Jeder Kurbelarm 48 ist in einem Schlitz 50 einer axialen Verstellstange 52 angeordnet. Durch eine Bewegung der Verstellstange 52 in Längsrichtung, d. h. entlang ihrer Länge, kann die Winkelstellung aller Lamellen 44 des Elements eingestellt werden. Dadurch wird der Spalt "G" zwischen benachbarten Lamellen 44 verändert. Der Spalt kann in ausgewählte Positionen zwischen einer völlig geöffneten und einer völlig geschlossenen Position eingestellt werden. Die Verstellstange 52 ist in einem sich axial erstreckenden Gehäuse 53 in der Form eines umgedrehten U aufgenommen.

Der Einstellmechanismus umfasst einen Aktor 56, der am Rahmen 45 befestigt ist und ein linear oder in Längsrichtung bewegliches Ausgabeelement 58 hat. Das Ausgabeelement 58 hat einen mit Gewinde versehenen Stempel 60, der durch eine Mutter an einer Halterung 62 befestigt ist. Die Halterung 62 ist starr mit der Verstellstange 52 verbunden. Wenn sich das Ausgabeelement 58 bewegt, wie durch den Pfeil 64 gezeigt, bewegt sich auch die Verstellstange 52, was zur Folge hat, dass sich die Kurbelarme 46 drehen, um die Winkelstellung der Lamellen 44 zu ändern. Eine Drehung der Lamellen 44 ändert den Spalt "G" zwischen benachbarten Lamellen 44.

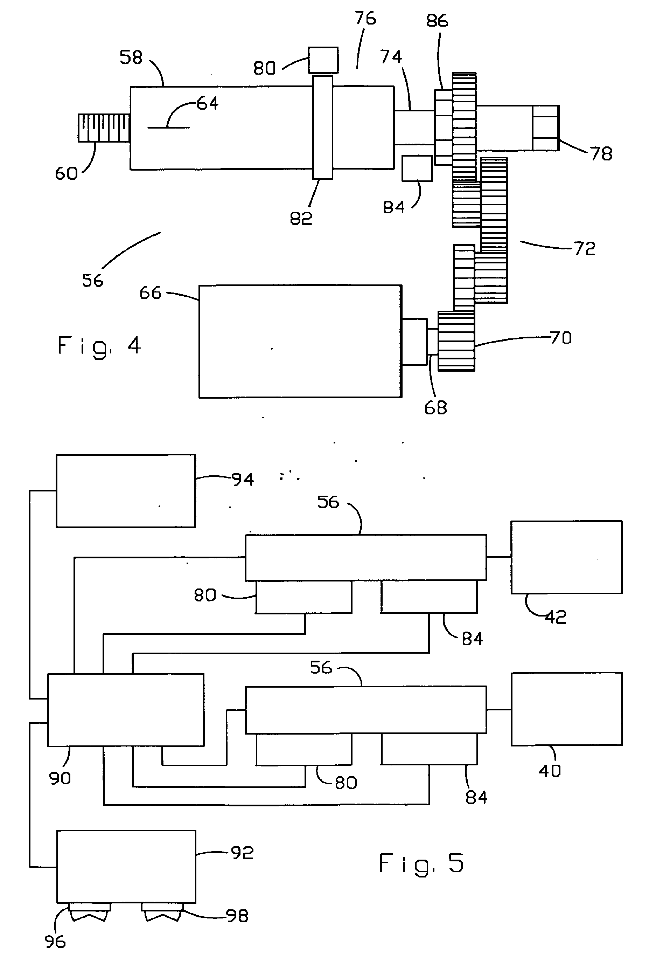

Die internen Komponenten des Aktors 56 sind detaillierter in der Figur 4 dargestellt, wobei das Gehäuse des Aktors 56 nicht gezeigt wird. Der Aktor 56 umfasst einen mit Leistung versorgten Motor 66 mit einer drehbaren Ausgangswelle 68, die ein Zahnrad 70 antreibt. In der bevorzugten Ausführungsform ist der Motor ein Elektromotor. Andere Typen von Motoren können verwendet werden, wie beispielsweise hydraulische, pneumatische usw.. Ein Geschwindigkeitsverminderungszahnradstrang 72 koppelt den Ausgang des Motors 66 mit der drehbaren Eingangswelle 74 eines Linearaktors 76. Wenn sich die Eingangswelle 74 dreht, bedingen innere Schraubengewinde im Linearaktor 76, dass sich das im Gehäuse des Aktors 56 drehfest festgelegte Ausgabeelement 58 linear oder in Längsrichtung bewegt, wie durch den Pfeil 64 gezeigt. Die Eingangswelle 74 ist mit einem hexagonalen, quadratischen oder ähnlichen, unrunden Formstück 78 geformt, das sich aus dem Gehäuse des Aktors 56 hinaus erstreckt, wie in den Figuren 2 und 3 gezeigt. Das Formstück 78 kann genutzt werden, die Eingangswelle 74 mit einem Schlüssel zu drehen, wenn es im Falle eines Fehlers des elektrischen Antriebssystems oder einer Beschädigung des Geschwindigkeitsverminderungszahnradstrangs 72 erforderlich wird.

Das Steuersystem für den Einstellmechanismus ist schematisch in der Figur 5 gezeigt. Zwei Aktoren 56 sind dargestellt, einer für das mit Lamellen 44 versehene Element des Obersiebs 40 und ein anderer für das Reinigungselement des Untersiebs 42. Falls das Obersieb 40 und das Untersieb 42 mehr als ein Element haben, ist für jedes Element ein Aktor 56 bereitgestellt. Das Steuersystem arbeitet über ein CAN-basiertes Controllernetzwerk, um es dem Bediener zu ermöglichen, Einstellungen während der Fahrt von der Kabine 34 aus zu machen. Ein Controller 90 mit einem Mikroprozessor ist im Kern des Steuersystems angeordnet und empfängt Eingaben von jedem der Sensoren 80 und 84. Eine weitere Eingabe an den Controller 90 ist vom Bedienereingabegerät 92, das in der Bedienerkabine 34 angeordnet ist, beabstandet vom Aktor 56. Der Bediener des Mähdreschers 10 benutzt das Bedienereingabegerät 92, um Einstellungen der Lamellenposition vorzunehmen. Ein zweites Eingabegerät (nicht dargestellt) kann an der Seite des Mähdreschers 10 bereitgestellt sein, um Einstellungen vorzunehmen, wenn der Mähdrescher 10 nicht erntet.

Die Ausgänge des Controllers 90 umfassen Signale an die Aktoren 56, um die jeweiligen Motore 66 zu betreiben, um die Lamellen 44 zu öffnen oder zu schließen. Zusätzlich zeigt eine Anzeigeeinrichtung 94 dem Bediener eine Zahl o. ä. an, die der Größe des Spalts "G" entspricht. Die Elemente des Obersiebs 40 und des Untersiebs 42 sind jeweils unabhängig voneinander durch einen separaten Schalter am Bedienereingabegerät 92 verstellbar. Wenn das Obersieb 40 und/oder das Untersieb 42 mehrere Elemente aufweisen, kann das Steuersystem eingerichtet sein, die Elemente getrennt oder gemeinsam einzustellen.

Das Steuersystem umfasst weiterhin einen ersten Sensor 80, der an der Länge des Ausgabeelements 58 angeordnet ist. Ein Magnet 82 veranlasst den Sensor 80, ein Signal zu erzeugen, wenn das Ausgabeelement 58 sich in einer bekannten Position befindet. In der bekannten Position ist der Spalt "G" zwischen benachbarten Lamellen bekannt. Der Spalt "G" in der bekannten Position wird in der Fabrik gemessen und ist im Speicher des Steuersystems abgespeichert. Ein zweiter Sensor 84 ist einem Magnetring 86 auf der Eingangswelle 74 des Linearaktors 76 benachbart positioniert. Der Sensor 84 erzeugt ein Signal, wenn je einer der Pole des Magnetrings 86 am Sensor 84 vorbeikommt. Bei jedem vom Sensor 84 erzeugten Signal hat sich das Ausgabeelement 58 über eine bekannte Entfernung bewegt, die einer bekannten Winkeldrehung der Kurbelwelle 46 entspricht, was den Spalt "G" zwischen benachbarten Lamellen 44 bedingt. Wenn sich das Ausgabeelement 58 aus der bekannten Position in irgendeine Richtung bewegt, ist das Ausmaß der Bewegung anhand des Ausgangssignals des zweiten Sensors 84 bekannt. Beide Sensoren 80, 84 sind vorzugsweise kontaktlose Sensortypen, wie Halleffektsensoren. Das verbessert die Haltbarkeit der Sensoren und die Gesamtfunktion des Steuersystems. Die dem Controller 90 ebenfalls bekannte Drehrichtung des Motors 66 kann ebenfalls berücksichtigt werden, um zu erkennen, ob die Lamellen 44 jeweils geöffnet oder geschlossen werden.

Der Motor 66 wird mit einem pulsbreitenmodulierten Steuersignal gesteuert. Der Motor 66 kann auf langsame Geschwindigkeit moduliert werden, wenn kleine Einstellungen der Lamellenposition durchgeführt werden, und auf hohe Geschwindigkeit, wenn große Verstellungen durchgeführt werden oder die Lamellen 44 zum Reinigen der Elemente völlig geöffnet werden. Das Bedienereingabegerät 92 ist mit einem Paar an Schaltern 96, 98 dargestellt, wobei ein Schalter dem Obersieb und einer dem Untersieb zugeordnet ist. Andere Schalteranordnungen können genutzt werden. Ein Betrieb mit zwei Geschwindigkeiten kann auf verschiedene Arten bewerkstelligt werden. Mehrere Schalter am Eingabegerät können verwednet werden, wobei eine Anzahl an Schaltern für geringe Geschwindigkeit, d. h. Feineinstellungen, und die andere Anzahl an Schaltern für schnelle Einstellungen verwendet werden. Alternativ kann ein Geschwindigkeitsauswahlschalter für langsame bzw. schnelle Geschwindigkeit gemeinsam mit einer Anzahl an Schaltern für die Reinigungselemente verwendet werden. Ein Betrieb mit zwei Geschwindigkeiten kann dem Controller 90 unter Verwendung verschiedener Schemata vorgegeben werden. Zum Beispiel kann ein Betrieb mit hoher Geschwindigkeit aktiviert werden, nachdem der Schalter für eine vorgegebene Zeitspanne gedrückt wurde. Ein anderes Schema erlaubt dem Bediener, Einstellungen mit niedriger Geschwindigkeit durchzuführen, und wenn der Aktor in einem Mähdrescher 10 mit automatischer Mähdreschereinstellungsoption verwendet wird, wird eine hohe Geschwindigkeit verwendet, um die Einstellungen zwischen voreingestellten Positionen für unterschiedliche Gutarten (Mais, Sojabohnen, Weizen etc.) zu ändern und auch, um die Lamellen 44 in eine weit geöffnete Reinigungsposition zu verbringen. Dem Gedanken, die Lamellen 44 mit unterschiedlichen Geschwindigkeiten zu verstellen, kommt selbstständiger erfinderischer Rang zu.

Der Aktor 56 treibt das Element direkt an, ohne jegliche Zahnräder oder Kopplungen zwischen dem Ausgabeelement 58 und den Lamellen 44. Das vermindert das tote Spiel und die Hysterese. Außerdem öffnen oder schließen sich die Lamellen 44 der Elemente unmittelbar mit der Aktivierung des Motors 66. Das Positionsfühlsystem der Lamellenöffnung ist in beiden Richtungen sehr genau. Die Halleffektsensoren haben keine sich berührenden Teile, so dass sie in der schüttelnden Umgebung der Elemente des Siebkastens 38 überstehen können. Der erste Sensor 80 wird auf eine bekannte Öffnung der Lamellen 44 in der Fabrik kalibriert und kann dann genutzt werden, die Genauigkeit des Rückkopplungssignals über die Zeit zu verfolgen. Dieses System kann in diese bekannte Position sowohl automatisch als auch auf Kommando durch den Bediener über das Bedienereingabegerät 92 rekalibriert werden.

Während der erfindungsgemäße Aktor 56 im Kontext der Reinigungselemente eines Obersiebs 40 und eines Untersiebs 42 beschrieben wurde, kann er auch mit einem mit Lamellen ausgestatteten Reinigungselement einer Vor-Reinigung genutzt werden.

## Patentansprüche

1. Reinigungselement eines Mähdreschers (10), das folgendes umfasst:
eine Vielzahl an einstellbaren Lamellen (44),
eine mit den Lamellen (44) gekoppelte Verstellstange (52), die senkrecht zu den Lamellen (44) angeordnet und in der Längsrichtung der Verstellstange (52) bewegbar ist,
einen fremdkraftbetriebenen Aktor (56), der ein an der Verstellstange (52) befestigtes Ausgabeelement (58) sowie ein Steuersystem des Aktors (56) aufweist,
wobei das Steuersystem einen ersten Sensor (80) und einen zweiten Sensor (84) umfasst und der erste Sensor (80) ein Ausgangssignal erzeugt, wenn sich das Ausgabeelement (58) in einer bekannten Position befindet, die einer bekannten Position der Lamellen (44) entspricht
**dadurch gekennzeichnet, dass** der zweite Sensor (84) ein Ausgangssignal erzeugt, das das Ausmaß der Bewegung des Ausgabeelements (58) beinhaltet, und dass die Öffnung der Lamellen (44) anhand des Ausmaßes der Bewegung des Ausgabeelements (58) aus der bekannten Position bestimmbar ist.

2. Reinigungselement nach Anspruch 1, **dadurch gekennzeichnet, dass** im Abstand vom Aktor (56) ein Bedienereingabegerät (92) zur Aktivierung des Aktors (56) zum Öffnen oder Schließen der Lamellen (44) und/oder eine sichtbare Anzeigeeinrichtung (94) zur sichtbaren Anzeige der Öffnung der Lamellen (44) für den Bediener angeordnet ist.

3. Reinigungselement nach Anspruch 2, **dadurch gekennzeichnet, dass** das Bedienereingabegerät (92) eine Eingabemöglichkeit zur Änderung der Position der Lamellen (44) mit einer von zwei verschiedenen Geschwindigkeiten bietet.

4. Reinigungselement nach einem der Ansprüche 1 bis 3,
**dadurch gekennzeichnet, dass** ein Programm des Steuersystems eine Änderung der Position der Lamellen (44) mit einer von zwei verschiedenen Geschwindigkeiten ermöglicht.

5. Reinigungselement nach einem der Ansprüche 1 bis 4,
**dadurch gekennzeichnet, dass** die Sensoren (80, 84) kontaktlose Sensoren, insbesondere Halleffektsensoren, sind.

6. Reinigungselement nach einem der Ansprüche 1 bis 5,
**dadurch gekennzeichnet, dass** der Aktor (56) einen elektrisch angetriebenen Motor (66) umfasst, der das Ausgabeelement (58) linear bewegt.

7. Reinigungselement nach einem der Ansprüche 1 bis 6,
**dadurch gekennzeichnet, dass** ein vorzugsweise mit einem Mikroprozessor versehener Controller (90) des Steuersystems Eingaben von den Sensoren (80, 84) erhält und Ausgabesignale an den Aktor (56) sendet, um die Lamellen (44) zu verstellen.

8. Reinigungselement nach einem der Ansprüche 1 bis 7,
**dadurch gekennzeichnet, dass** ein vorzugsweise mit einem Mikroprozessor versehener Controller (90) des Steuersystems Ausgabesignale an eine Anzeigeeinrichtung (94) sendet, um die Position der Lamellen (44) anzuzeigen.

9. Reinigungselement nach einem der vorhergehenden Ansprüche, **gekennzeichnet durch** Mittel zum manuellen Verstellen des Ausgabeelements (58).

10. Verfahren zur Kalibrierung einer Einstelleinrichtung eines Reinigungselements eines Mähdreschers (10), das eine Vielzahl verstellbarer Lamellen (44), die an einem Rahmen (45) abgestützt sind, eine zum Verstellen der Lamellen (44) eingerichtete Verstellstange (52), die senkrecht zu den Lamellen (44) angeordnet und in der Längsrichtung der Verstellstange (52) bewegbar ist, und einen am Rahmen (45) befestigten, fremdkraftbetriebenen Aktor (56) mit einem bewegbaren Ausgabeelement (58) aufweist, das an der Verstellstange (52) befestigt ist, um sie zu bewegen und in einer ausgewählten Position zu halten, und mit einem Steuersystem, das einen ersten Sensor (80), der ein Ausgangssignal erzeugt, wenn sich das Ausgabeelement (58) in einer bekannten Position befindet, die einer bekannten Position der Lamellen (44) entspricht, und einen zweiten Sensor (84) umfasst, wobei ein Mikroprozessor des Steuersystems Eingaben von den Sensoren (80, 84) erhält und Ausgaben an den Aktor gibt, **dadurch gekennzeichnet**, der zweite Sensor (84) ein Ausgangssignal erzeugt, das das Ausmaß der Bewegung des Ausgabeelements (58) beinhaltet, und dass das Verfahren folgende Schritte umfasst:
Bewegen des Ausgabeelements (58) in die bekannte Position;
aufeinanderfolgendes Bewegen des Ausgabeelements (58) und Messen der Bewegung des Ausgabeelements (58) anhand des vom zweiten Sensor (84) erzeugten Ausgangssignals, und
Feststellen der Position der Lamellen anhand der Bewegung des Ausgabeelements (58) von der bekannten Position fort.

## Claims

1. Cleaning element for a combine harvester (10) which comprises the following:
a plurality of adjustable louvres (44), an adjusting rod (52) coupled to the louvres (44), which is arranged perpendicular to the louvres (44) and which is movable in the longitudinal direction of the adjusting rod (52),
a powered actuator (56) which comprises an output element (58) fastened to the adjusting rod (52) as well as a control system for the actuator (56),
the control system comprising a first sensor (80) and a second sensor (84) and the first sensor (80) generating an output signal when the output element (58) is located in a known position which corresponds to a known position of the louvres (44),
**characterized in that** the second sensor (84) generates an output signal which includes the extent of the movement of the output element (58) and **in that** the opening of the louvres (44) may be determined using the extent of the movement of the output element (58) from the known position.

2. Cleaning element according to Claim 1, **characterized in that** an operator input device (92) for activating the actuator (56) for opening or closing the louvres (44) and/or a visible display device (94) for the visible display of the opening of the louvres (44) for the operator are arranged at a distance from the actuator (56).

3. Cleaning element according to Claim 2, **characterized in that** the operator input device (92) provides an input facility for altering the position of the louvres (44) at one of two different speeds.

4. Cleaning element according to one of Claims 1 to 3, **characterized in that** a program of the control system allows an alteration to the position of the louvres (44) at one of two different speeds.

5. Cleaning element according to one of Claims 1 to 4, **characterized in that** the sensors (80, 84) are non-contact sensors, in particular Hall effect sensors.

6. Cleaning element according to one of Claims 1 to 5, **characterized in that** the actuator (56) comprises an electrically driven motor (66) which moves the output element (58) in a linear manner.

7. Cleaning element according to one of Claims 1 to 6, **characterized in that** a controller (90) for the control system preferably provided with a microprocessor receives inputs from the sensors (80, 84) and transmits output signals to the actuator (56) in order to adjust the louvres (44).

8. Cleaning element according to one of Claims 1 to 7, **characterized in that** a controller (90) for the control system preferably provided with a microprocessor transmits output signals to a display device (94) in order to display the position of the louvres (44).

9. Cleaning element according to one of the preceding claims, **characterized by** means for the manual adjustment of the output element (58).

10. Method for calibrating an adjusting device of a cleaning element of a combine harvester (10) which comprises a plurality of adjustable louvres (44) which are supported on a frame (45), an adjusting rod (52) designed to adjust the louvres (44), which is arranged perpendicular to the louvres (44) and is movable in the longitudinal direction of the adjusting rod (52), and a powered actuator (56) fastened to the frame (45) with a movable output element (58), which is fastened to the adjusting rod (52) in order to move said adjusting rod and to retain said adjusting rod in a selected position, and with a control system which comprises a first sensor (80), which generates an output signal when the output element (58) is located in a known position, which corresponds to a known position of the louvres (44) and a second sensor (84), a microprocessor of the control system receiving inputs from the sensors (80, 84) and transmitting outputs to the actuator, **characterized in that** the second sensor (84) generates an output signal which includes the extent of the movement of the output element (58) and **in that** the method comprises the following steps:
moving the output element (58) into the known position;
successive movement of the output element (58) and measuring of the movement of the output element (58) using the output signal generated by the second sensor (84) and determining the position of the louvres using the movement of the output element (58) away from the known position.

## Revendications

1. Élément de nettoyage d'une moissonneuse-batteuse (10), qui comporte les éléments suivants :
- une pluralité de lamelles (44) réglables,
- une tige de réglage (52), qui est couplée aux lamelles (44) et qui est agencée perpendiculairement aux lamelles (44) et est mobile dans le sens longitudinal de la tige de réglage (52),
- un actionneur (56), qui est actionné par une force extérieure et qui comporte un élément de sortie (58) fixé sur la tige de réglage (52), ainsi qu'un système de commande de l'actionneur (56),
- le système de commande comportant un premier capteur (80) et un deuxième capteur (84) et le premier capteur (80) générant un signal de sortie lorsque l'élément de sortie (58) se situe dans une position connue, qui correspond à une position connue des lamelles (44),
**caractérisé en ce que** le deuxième capteur (84) génère un signal de sortie qui contient l'ampleur du mouvement de l'élément de sortie (58), et **en ce que** l'ouverture des lamelles (44) peut être définie à l'appui de l'ampleur du mouvement de l'élément de sortie (58) hors de la position connue.

2. Élément de nettoyage selon la revendication 1, **caractérisé en ce qu'**un dispositif de saisie (92) pour l'activation de l'actionneur (56) en vue de l'ouverture ou de la fermeture des lamelles (44) et/ou un dispositif d'affichage (94) visible pour un affichage visible de l'ouverture des lamelles (44) sont agencés pour l'utilisateur à distance de l'actionneur (56).

3. Élément de nettoyage selon la revendication 2, **caractérisé en ce que** le dispositif de saisie (92) permet à l'utilisateur d'entrer des paramètres pour faire varier la position des lamelles (44) avec l'une des deux vitesses différentes.

4. Élément de nettoyage selon l'une quelconque des revendications 1 à 3, **caractérisé en ce qu'**un programme du système de commande permet de faire varier la position des lamelles (44) avec l'une des deux vitesses différentes.

5. Élément de nettoyage selon l'une quelconque des revendications 1 à 4, **caractérisé en ce que** les capteurs (80, 84) sont des capteurs sans contact, en particulier des capteurs à effet Hall.

6. Élément de nettoyage selon l'une quelconque des revendications 1 à 5, **caractérisé en ce que** l'actionneur (56) comporte un moteur (66) actionné électriquement, par lequel l'élément de sortie (58) est déplacé linéairement.

7. Élément de nettoyage selon l'une quelconque des revendications 1 à 6, **caractérisé en ce qu'**un contrôleur (90) du système de commande, muni de préférence d'un microprocesseur, reçoit des paramètres d'entrée émis par les capteurs (80, 84) et émet des signaux de sortie vers l'actionneur (56) en vue de déplacer les lamelles (44).

8. Élément de nettoyage selon l'une quelconque des revendications 1 à 7, **caractérisé en ce qu'**un contrôleur (90) du système de commande, muni de préférence d'un microprocesseur, émet des signaux de sortie vers un dispositif d'affichage (94) en vue d'afficher la position des lamelles (44).

9. Élément de nettoyage selon l'une quelconque des revendications précédentes, **caractérisé par** des moyens de réglage manuel de l'élément de sortie (58).

10. Procédé de calibrage d'un dispositif de réglage d'un élément de nettoyage d'une moissonneuse-batteuse (10), qui comporte une pluralité de lamelles (44) réglables, qui sont en appui contre un châssis (45), une tige de réglage (52), qui est conçue pour le réglage des lamelles (44) et qui est agencée perpendiculairement aux lamelles (44) et est mobile dans le sens longitudinal de la tige de réglage (52), et un actionneur (56), qui est fixé contre le châssis (45) et est actionné par une force extérieure et qui comporte un élément de sortie (58) mobile, qui est fixé sur la tige de réglage (52) en vue de déplacer celle-ci et de la maintenir dans une position sélectionnée, ainsi qu'un système de commande qui comporte un premier capteur (80) générant un signal de sortie lorsque l'élément de sortie (58) se situe dans une position connue, qui correspond à une position connue des lamelles (44), et un deuxième capteur (84), un microprocesseur du système de commande recevant des données d'entrée émises par les capteurs (80, 84) et émettant des données de sortie vers l'actionneur, **caractérisé en ce que** le deuxième capteur (84) génère un signal de sortie qui contient l'ampleur du mouvement de l'élément de sortie (58), et **en ce que** le procédé comporte les étapes suivantes :
- déplacement de l'élément de sortie (58) dans la position connue ;
- déplacement consécutif de l'élément de sortie (58) et mesure du mouvement de l'élément de sortie (58) à l'appui du signal de sortie généré par le deuxième capteur (84), et
- détection de la position des lamelles à l'appui du mouvement de l'élément de sortie (58) à partir de la position connue.
